# EUROPÄISCHE PATENTANMELDUNG

(11) **EP 0 650 060 A1**
(43) Veröffentlichungstag der Anmeldung: **26.04.1995**
(21) Anmeldenummer: 94116104.4
(22) Anmeldetag: 12.10.1994
(51) Int. Cl.: G01P 13/02

(54) **Hochauflösendes Drehzahlmesssystem, insbesondere für elektrische Türantriebe**

(30) Priorität: 22.10.1993 DE 4336133
(71) Anmelder: SIEMENS AKTIENGESELLSCHAFT, D-80333 München (DE)
(72) Erfinder: Ludwig, Heinz, Dipl.-Ing., D-30823 Garbsen (DE); Sonntag, Guido, Dipl.-Ing., D-30989 Gehrden (DE)

(57) **Zusammenfassung**

Die Erfindung betrifft ein Auswertungsverfahren und eine elektronische Auswertungseinrichtung für von einem mehrkanalig, insbesondere zweikanalig arbeitenden, opto-elektronischen Drehzahlmesser am Antriebsmotor einer mechanischen Einrichtung, insbesondere einer Türbewegungsmechanik, abgegebene Impulse mit An- und Abstiegsflanken, wobei die Impulse auf den einzelnen Kanälen (A,B) zeitlich gestaffelt ausgegeben werden, um die Drehrichtung des Motors angeben zu können, und wobei die Drehzahlmessung durch eine Zeitdifferenzmessung zwischen Flanken der abgegebenen Impulse, insbesondere zweier aufeinanderfolgender Impulse (Periodenmessung), erfolgt.

## Beschreibung

Die Erfindung betrifft ein Auswertungsverfahren und eine elektronische Auswertungseinrichtung für von einem mehrkanalig, insbesondere zweikanalig, arbeitenden opto-elektronischen Drehzahlmesser am Antriebsmotor einer mechanischen Einrichtung, insbesondere einer Türbewegungsmechanik, abgegebene Impulse mit An- und Abstiegsflanken, wobei die Impulse auf den einzelnen Kanälen zeitlich gestaffelt ausgegeben werden, um die Drehrichtung des Motors bestimmen zu können.

Opto-elektronische Drehzahlmesser sind bekannt, so z.B. von der Firma Hewlett Packard (HP) die Typen HEDS und HEDM. Diese bekannten Drehzahlmesser sind zwei- oder dreikanalige optische Decoder mit einem mit Durchbrüchen oder Marken versehenen Rad, das zwischen einem optischen Teil mit einer Leuchtdiode und einem Empfängerteil mit verteilten Fotodioden rotiert. Die Fotodioden sind derart angeordnet, daß sich auf zwei Kanälen um 90° versetzte Impulse ergeben. Der Unterschied zwischen den Typen HEDM und HEDS der bekannten optischen Decoder besteht lediglich in dem Material der rotierenden Scheibe, einmal ist es Metall, und einmal filmartiges Material. Diese Ausführung ist für sehr hohe Auflösungen bestimmt. Bei sehr langsamen Bewegungen des Antriebsmotors werden derartige Einrichtungen, die in einbaufertiger Ausbildung als Resolver bezeichnet werden, mit einem Übersetzungsgetriebe auf dem Antriebsmotor angeordnet, um eine ausreichende Zahl von Impulsen je Zeiteinheit zur Ermittlung einer Momentangeschwindigkeit zu erhalten.

Es ist Aufgabe der Erfindung, ein Auswertungsverfahren und eine elektronische Auswertungseinrichtung für die von den obengenannten Drehzahlmessern abgegebenen Impulse anzugeben, die ohne Zwischenschaltung eines Getriebes auch bei sehr langsamen Bewegungen eine genaue Drehzahlmessung ermöglichen.

Zur Lösung der Aufgabe ist vorgesehen, daß die Drehzahlmessung durch eine Zeitdifferenzmessung zwischen Flanken der abgegebenen Impulse, insbesondere zweier aufeinanderfolgender Impulse (Periodenmessung), erfolgt. So kann vorteilhaft auf elektronischem Wege eine sehr viel höhere Auflösung als bei den bekannten Impulszählverfahren erreicht werden . Ein aufwendiges Übersetzungsgetriebe kann in der Regel entfallen. Dies ist insbesondere der Fall, wenn die Drehzahlmessung durch die Berücksichtigung von zumindest zwei, sich auf den Kanälen überlappenden, Perioden erfolgt. Schon nach dem Durchlauf von 2,5 Impulsen auf einem Kanal können vier Periodenmessungen auf den beiden Kanälen erfolgen. So wird sehr schnell ein zuverlässiger Mittelwert erhalten. Da immer über komplette Perioden der beiden Kanäle gemessen wird, spielen Phasenfehler (Lage der Umschaltpunkte in den Kanälen) und der Versatzfehler zwischen den Kanälen keine Rolle. Gegebenenfalls, Voraussetzung ist eine exakte Lage und Ausbildung der Öffnungen oder Marken auf der rotierenden Scheibe, ist auch eine Messung über die einzelnen Impulse, d.h. zwischen der An- und Abstiegsflanke von Einzelimpulsen möglich. So kann gegebenenfalls auch mit einer Auswertung von nur einer Periode je Kanal ein ausreichend zuverlässiger Momentan-Drehzahlwert erhalten werden. Die Drehzahlauflösung wird so noch weiter erhöht.

In Ausgestaltung der Erfindung ist dabei vorgesehen, daß zur Ermittlung der Momentandrehzahl laufend die Zeiten der, vorzugsweise jeweils letzten beiden, gemessenen Perioden zur Berücksichtigung von einem Prozessor übernommen und die vor den letzten berücksichtigten Messungen liegenden Messungen gelöscht werden. So liegt in einem Speicher stets der letzte Momentanwert der Drehzahlmessung vor.

Zur Durchführung des Auswertungsverfahrens ist eine elektronische Auswerteeinrichtung vorgesehen, die zumindest zwei, vorzugsweise vier, parallel arbeitende Bitzähler aufweist, denen ein konstanter, schneller Zählertakt aufgebbar und aus deren Werten der Momentandrehzahlwert errechenbar ist. Zusammen mit einer Drehrichtungs-Auswerteeinheit und einer Umdrehungszähleinrichtung in Form von integrierten Untereinheiten ergibt sich so eine komplette, vorzugsweise für Türsteuerungen, seien es normale elektrische Schiebetüren, Aufzugstüren oder auch Drehtüren, geeignete einfache, als kundenspezifischer IC ausbildbare, Einrichtung. Zusammen mit entsprechenden Speicherelementen kann auch ein programmierbarer Logicchip eingesetzt werden.

Die Erfindung wird anhand von Zeichnungen näher erläutert, aus denen weitere, ebenso wie aus den Unteransprüchen auch erfinderische, Einzelheiten entnehmbar sind. Im einzelnen zeigen:
- FIG 1: ein Taktdiagramm von zwei Kanälen A und B,
- FIG 2: eine Prinzipschaltung der Auswerteeinrichtung und
- FIG 3: eine Prinzipdarstellung einer für die Erzeugung der erfindungsgemäß benutzten Impulse geeigneten opto-elektronischen Einrichtung.

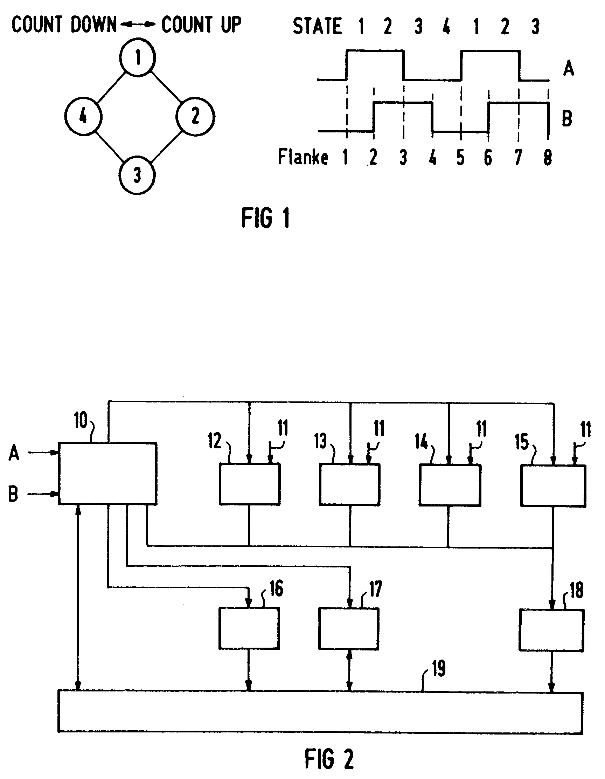

In FIG 1 bezeichnet die Linie A die Impulse des einen und die Linie B die Impulse des anderen Impuls-Ausgabe-Kanals. Die Flanken, die wie hier gezeigt zu Rechteckimpulsen gehören, aber auch zu tatsächlich vorliegenden Trapezimpulsen gehören können, sind durchlaufend (für zwei Perioden) mit 1 bis 8 bezeichnet. Der zugehörige Zählstatus ("STATE") ist mit 1,2,3,4 usw. bezeichnet. Die Drehrichtung wird durch die Impulsfolge auf den beiden Kanälen A und B ermittelt. Die Zählfolge 1,2,3 im Zählstern, über der "count up" steht, bedeutet z.B. Rechtslauf und die Zählfolge 1,4,3, über der "count down" steht, bedeutet Linkslauf.

In FIG 2 bezeichnet 12,13,14 und 15 die Bitzähler, denen ein mit den Pfeilen 11 symbolisch bezeichneter schneller Zeittakt sowie über eine Steuerung 10 die Flanken der von den Kanälen A und B kommenden Impulse aufgegeben werden. Die Drehzahlermittlung erfolgt nun derart, daß der Bitzähler 12 bei Flanke 1 gestartet wird. Bei Flanke 5 wird der Zählerstand in eine Einheit 18 übertragen und der Bitzähler 12 gelöscht und neu gestartet. Der Bitzähler 13 wird bei Flanke 2 gestartet. Bei Flanke 6 wird der Zählerstand ebenfalls in die Einheit 18 übertragen, der Bitzähler 13 gelöscht und neu gestartet. Der Bitzähler 14 wird bei Flanke 3 gestartet. Bei Flanke 7 wird der Zählerstand ebenfalls in die Einheit 18 übertragen, der Bitzähler 14 gelöscht und neu gestartet. Der Bitzähler 15 wird bei Flanke 4 gestartet. Bei Flanke 8 wird der Zählerstand ebenfalls in die Einheit 18 übertragen, der Bitzähler 15 gelöscht und neu gestartet. Durch diese Vorgehensweise befindet sich immer der aktuelle Geschwindigkeitswert in der Einheit 18, z.B. ein 8-Bit-Latch. Ein Prozeßinterface 19 verbindet die Auswerteeinrichtung mit der zu steuernden mechanischen Einrichtung, beispielsweise einer Aufzugstürsteuerung. Mit 16 ist eine Drehrichtungs-Auswerteeinheit bezeichnet. Wie sich überraschenderweise ergeben hat, ist die Auflösung, z.B. bei Verwendung einer Filmscheibe in der opto-elektronischen Drehzahlmeßeinrichtung mit 1024 Markierungen, beim erfindungsgemäßen Vorgehen so hoch, daß auch die kleinsten Geschwindigkeiten, die sich bei Öffnungs- und Schließvorgängen von Schiebetüren aller Art ergeben, sicher erfaßt werden. Insgesamt ergibt sich eine überraschend einfache und genaue Drehzahlmessung, die prinzipiell gleich auch als Geschwindigkeitsmessung bei einer zumindest zweikanaligen optisch-elektronischen Markierungserfassung eines Weggebers verwendet werden kann.

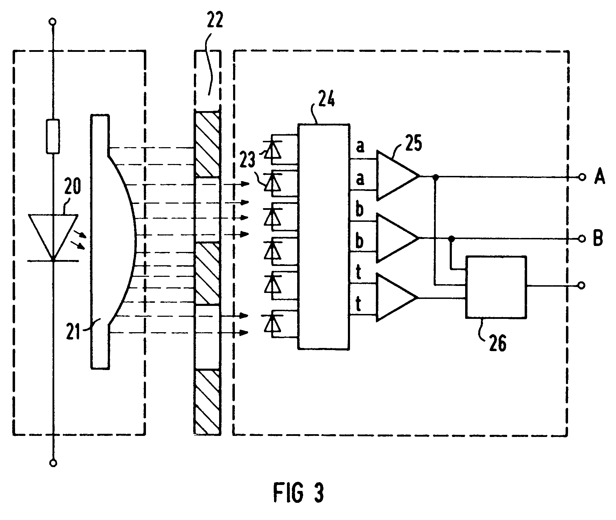

In FIG 3, die eine opto-elektronische Drehzahlmeßeinrichtung der Firma Hewlett Packard (HP) zeigt, bezeichnet 20 eine Leuchtdiode und 21 eine zwischen der Leuchtdiode 20 und einer rotierenden Scheibe 22 angeordnete optische Einrichtung. Die Fotodioden 23 erfassen die entstehenden Lichtimpulse und wandeln diese über einen Signalprozessor 24 und Komparatoren 25 in elektrische Impulse um, die auf den Kanälen A und B ausgegeben werden. 26 bezeichnet eine optional vorhandene Einheit, die, für die Positionsermittlung von Türen u.U. wichtig, volle Umdrehungen zählt. Es ist ohne weiteres ersichtlich, daß das vorstehend beschriebene Meßprinzip auch auf lineare zweikanalige Geber übertragen werden kann. In beiden Fällen ergibt sich die bisher unerreicht hohe Auflösung mit ihrer sehr schnellen Ermittlung des momentanen Drehzahl bzw. Geschwindigkeitswertes.

## Patentansprüche

1. Auswertungsverfahren und elektronische Auswertungseinrichtung für von einem mehrkanalig, insbesondere zweikanalig, arbeitenden opto-elektronischen Drehzahlmesser am Antriebsmotor einer mechanischen Einrichtung, insbesondere einer Türbewegungsmechanik, abgegebene Impulse mit An- und Abstiegsflanken, wobei die Impulse auf den einzelnen Kanälen zeitlich gestaffelt ausgegeben werden, um die Drehrichtung des Motors bestimmen zu können,
**dadurch gekennzeichnet**,
daß die Drehzahlmessung durch eine Zeitdifferenzmessung zwischen Flanken der abgegebenen Impulse, insbesondere zweier aufeinanderfolgender Impulse (Periodenmessung), erfolgt.

2. Auswertungsverfahren nach Anspruch 1,
**dadurch gekennzeichnet**,
daß die Drehzahlmessung durch die Berücksichtigung von zumindest zwei, vorzugsweise vier, sich auf den Kanälen überlappenden Perioden erfolgt.

3. Auswertungsverfahren nach Anspruch 1 oder 2,
**dadurch gekennzeichnet**,
daß zur Ermittlung der Momentandrehzahl laufend die Zeiten der, vorzugsweise jeweils letzten beiden, gemessenen Perioden zur Berücksichtigung von einem Prozessor übernommen und die vor den letzten berücksichtigten Messungen liegenden Messungen gelöscht werden.

4. Auswertungsverfahren nach Anspruch 1,2 oder 3,
**dadurch gekennzeichnet**,
daß die Periodenmessungen durch Messungen an Einzelimpulsen ergänzt werden.

5. Elektrische Auswerteeinrichtung zur Durchführung des Auswertungsverfahrens nach einem oder mehreren der vorhergehenden Ansprüche,
**dadurch gekennzeichnet**,
daß sie zumindest zwei, vorzugsweise vier, parallel arbeitende Bitzähler (12-15) aufweist, denen ein konstanter, schneller Zählertakt aufgebbar und aus deren Werten der Momentandrehzahlwert errechenbar ist.

6. Auswerteeinrichtung nach Anspruch 5,
**dadurch gekennzeichnet**,
daß sie eine Drehrichtungs-Auswerteeinheit (16) aufweist.

7. Auswerteeinrichtung nach Anspruch 5 oder 6,
**dadurch gekennzeichnet**,
daß sie eine Umdrehungszähleinrichtung (26) zur Stellungskontrolle der mechanischen Einrichtung aufweist.

8. Auswerteeinrichtung nach Anspruch 5,6 oder 7,
**dadurch gekennzeichnet**,
daß sie ein Prozessorinterface (19) aufweist, das mit einer elektrischen Türsteuerung, insbesondere einer Aufzugstürsteuerung, verbindbar ist.

9. Auswerteeinrichtung nach Anspruch 5,6,7 oder 8,
**dadurch gekennzeichnet**,
daß sie als aufgabenspezifischer IC ausgebildet ist.

10. Auswerteeinrichtung nach Anspruch 5,6,7 oder 8,
**dadurch gekennzeichnet**,
daß sie als programmierbarer Logic- und Speicherchip ausgebildet ist.

11. Auswertungsverfahren und Auswertungseinrichtung nach dem Prinzip eines oder mehrerer der vorhergehenden Ansprüche,
**dadurch gekennzeichnet**,
daß sie zur Messung von opto-elektronisch zweikanalig detektierten Geschwindigkeiten verwendet werden.
